# EUROPÄISCHE PATENTANMELDUNG

(11) **EP 2 868 536 A1**
(43) Veröffentlichungstag der Anmeldung: **06.05.2015**
(21) Anmeldenummer: 14191344.2
(22) Anmeldetag: 31.10.2014
(51) Int. Cl.: B60S 1/08

(54) **Aktivierung von Fahrzeugkomponenten basierend auf Informationen aus der Umgebung**

(30) Priorität: 31.10.2013 DE 102013222264
(71) Anmelder: Continental Automotive GmbH, 30165 Hannover (DE)
(72) Erfinder: Schmalriede, Tobias, 60321 Frankfurt (DE); Garschke, Thomas, 78250 Tengen (DE); von Rosenberg, Harald, 78126 Königsfeld (DE); Dilsiz, Rahman, 78549 Spaichingen (DE)

(57) **Zusammenfassung**

Eine Sensoranordnung (101) erfasst und überwacht Fahrzeuge (200), die sich hinter dem eigenen Fahrzeug (100) befinden. Falls eines der hinteren Fahrzeuge einen Mindestabstand zum eigenen Fahrzeug unterschreitet, der von der aktuellen Geschwindigkeit des eigenen Fahrzeugs abhängen kann, wird der Heckscheibenwischer (111) des eigenen Fahrzeugs aktiviert. Hierdurch kann die Aufmerksamkeit des Fahrers auf den rückseitigen Verkehr gerichtet werden. Dies ist insbesondere dann vorteilhaft, wenn ein Überholmanöver eingeleitet werden soll.

## Beschreibung

### Gebiet der Erfindung

Die Erfindung betrifft die Assistenz- und Sicherheitstechnik von Fahrzeugen. Insbesondere betrifft die Erfindung ein Fahrzeug mit einer Sensoranordnung und einer Steuereinheit, ein Verfahren zum Verbessern der Sicht durch eine Heckscheibe eines Fahrzeugs basierend auf Informationen auf ein sich hinter dem Fahrzeug befindendes, hinteres Fahrzeug, ein Programmelement und ein computerlesbares Medium.

### Hintergrund

Um es dem Fahrer eines Fahrzeugs zu ermöglichen, den Verkehr zu beobachten, können an regnerischen Tagen Front- und Heckscheibenwischer eingesetzt werden. Diese Scheibenwischer können einen automatisierten Betriebsmodus aufweisen, in welchem sie angesteuert werden, wenn eine an der Front- bzw. Heckscheibe angebrachte Sensorik Regentropfen auf der Scheibe erkennt, so dass die Sicht durch die Scheibe einen vorbestimmten Grenzwert unterschreitet.

Dies hat zur Folge, dass ein in diesem automatisierten Modus betriebener Heckscheibenwischer immer dann aktiviert wird, wenn sich entsprechend viele Tropfen auf der Scheibe gebildet haben.

Die Aktivierung des Heckscheibenwischers kann die Aufmerksamkeit des Fahrers ablenken.

### Zusammenfassung der Erfindung

Es ist eine Aufgabe der Erfindung, die Sicherheit im Straßenverkehr zu erhöhen.

Diese Aufgabe wird durch die Merkmale der unabhängigen Patentansprüche gelöst. Weiterbildungen der Erfindung ergeben sich aus den abhängigen Ansprüchen und der folgenden Beschreibung.

Gemäß einem ersten Aspekt der Erfindung ist ein Fahrzeug angegeben, welches eine Sensoranordnung und eine Steuereinheit aufweist. Die Sensoranordnung ist zur Erfassung und Überwachung eines sich hinter dem Fahrzeug befindenden, hinteren Fahrzeugs ausgeführt. Die Steuereinheit dient der Ansteuerung einer ersten Fahrzeugkomponente des Fahrzeugs, die mit einer Heckscheibe des Fahrzeugs zusammenhängt, und zwar in Abhängigkeit von einer von der Sensoranordnung erfassten Bewegung des hinteren Fahrzeugs.

Die Sensoranordnung kann ausgeführt sein, auch Fahrzeuge zu erfassen und zu überwachen, die sich vor, neben und/oder schräg hinter dem Fahrzeug befinden. Stellt die Steuereinheit durch Auswertung und Analyse der von der Sensoranordnung erfassten und an sie übertragenen Messdaten fest, dass sich das hintere Fahrzeug in einer bestimmten Weise bewegt, so steuert sie die erste Fahrzeugkomponente des Fahrzeugs an. Diese Fahrzeugkomponente hängt mit der Heckscheibe des Fahrzeugs zusammen. Dies bedeutet, dass die Fahrzeugkomponente eine Funktion übernimmt, die direkt oder indirekt mit der Heckscheibe in Verbindung steht.

Beispielsweise handelt es sich bei dieser Fahrzeugkomponente um eine Vorrichtung, durch welche die Sicht durch die Heckscheibe des Fahrzeugs verbessert werden kann. Es kann selbstverständlich vorgesehen sein, dass die Ansteuerung der ersten Fahrzeugkomponente nur dann erfolgt, wenn die Sicht durch die Heckscheibe auch tatsächlich getrübt ist, so dass durch die Ansteuerung eine Verbesserung der Sicht erzielt werden kann.

Durch die Aktivierung bzw. Ansteuerung der Fahrzeugkomponente soll die Sicht durch die Heckscheibe des Fahrzeugs verbessert werden, wenn die Steuereinheit durch die Analyse der von der Sensoranordnung erfassten Messdaten zu dem Ergebnis gelangt ist, dass die erfasste Bewegung oder der Abstand des hinteren Fahrzeugs ein bestimmtes Kriterium erfüllt. Andernfalls wird die erste Fahrzeugkomponente nicht angesteuert.

Hierdurch kann vorteilhaft vermieden werden, dass die erste Fahrzeugkomponente auch in Situationen angesteuert wird, die dies nicht erfordern. Die Dichte der Regentropfen auf einer Heckscheibe würde in diesem Fall kein ausreichendes Kriterium zur Ansteuerung der ersten Fahrzeugkomponente bilden. Vielmehr ist es darüber hinaus erforderlich, dass sich hinter oder schräg hinter dem Fahrzeug ein weiteres Fahrzeug befindet, welches einen bestimmten, vorab definierten Bewegungszustand einnimmt.

Hierdurch kann die Verkehrssicherheit erhöht werden, da der Fahrer nicht zu unpassenden Zeiten von beispielsweise einem wischenden Heckscheibenwischer abgelenkt werden kann.

Alternativ oder zusätzlich kann vorgesehen sein, dass die Steuereinheit zur Ansteuerung einer zweiten Fahrzeugkomponente des Fahrzeugs in Abhängigkeit der von der Sensoranordnung erfassten Bewegung des hinteren Fahrzeugs ausgeführt ist, wobei es sich bei der zweiten Fahrzeugkomponente um eine Heckscheibenheizung oder einen Heckscheibenlüfter handelt. Auch können sowohl Heckscheibenheizung und Heckscheibenlüfter angesteuert (aktiviert) werden, wenn die Steuereinheit zu dem Ergebnis gelangt, dass der Bewegungszustand des hinteren Fahrzeugs bzw. der Abstand zwischen dem Fahrzeug und dem hinteren Fahrzeug ein bestimmtes Kriterium erfüllt.

Die Aktivierung der ersten und/oder zweiten Fahrzeugkomponente bietet mehrere Vorteile: Zum einen wird dadurch die Sicht durch die Heckscheibe verbessert, falls diese beschlagen oder von Regentropfen getrübt ist. Zum anderen wird insbesondere durch die Ansteuerung des Heckscheibenwischers die Aufmerksamkeit des Fahrers auf die Heckscheibe gelenkt, so dass er daran erinnert wird, den rückseitigen Verkehr zu beobachten.

Alternativ oder zusätzlich zur Ansteuerung bzw. Aktivierung der ersten und/oder zweiten Fahrzeugkomponente kann vorgesehen sein, dass in diesem Fall die Steuereinheit ein akustisches und/oder optisches und/oder haptisches Warnsignal für den Fahrer generiert, welches ihn auf den rückseitigen Verkehr aufmerksam macht und beispielsweise im Cockpit des Fahrzeugs ausgegeben wird.

Hierdurch kann die Aufmerksamkeit des Fahrers mit höherer Wahrscheinlichkeit auf den rückseitigen Verkehr gelenkt werden.

Gemäß einer weiteren Ausführungsform der Erfindung ist die Sensoranordnung zur Bestimmung der Relativgeschwindigkeit zwischen dem Fahrzeug und dem hinteren Fahrzeug sowie zur Bestimmung des Abstands zwischen dem Fahrzeug und dem hinteren Fahrzeug ausgeführt.

Insbesondere kann die Sensoranordnung ausgeführt sein, den aktuellen Abstand zwischen den beiden Fahrzeugen kontinuierlich zu überwachen und die Steuereinheit kann ausgeführt sein, die Abstandsänderungsrate zwischen den beiden Fahrzeugen auszuwerten, so dass der Fahrer frühzeitig gewarnt werden kann, indem die erste und/oder die zweite Fahrzeugkomponente angesteuert wird.

Es kann vorgesehen sein, dass die erste Fahrzeugkomponente und/oder die zweite Fahrzeugkomponente nur dann von der Steuereinheit angesteuert wird, wenn sich ein Fahrzeug direkt hinter oder schräg hinter dem Fahrzeug befindet, ein bestimmter Mindestabstand zwischen dem Fahrzeug und dem hinteren Fahrzeug unterschritten ist und die Heckscheibe des Fahrzeugs aufgrund von Feuchtigkeit (Regentropfen oder Beschlag) nur eingeschränkte Sicht zulässt.

Auch kann vorgesehen sein, dass die entsprechende Fahrzeugkomponente unabhängig von den Sichtverhältnissen durch die Scheibe aktiviert wird, wenn der Mindestabstand zwischen den Fahrzeugen unterschritten wird. In diesem Fall ist es möglich, die Aufmerksamkeit des Fahrers durch Aktivierung des Heckscheibenwischers und/oder akustische/optische Warnsignale auf den Heckbereich des Fahrzeugs zu lenken.

Auch kann die absolute Geschwindigkeit des hinteren Fahrzeugs bei der Entscheidung, ob die entsprechende Fahrzeugkomponente zu aktivieren ist oder nicht, mit einbezogen werden. So kann es beispielsweise bei sehr hohen Fahrzeuggeschwindigkeiten vorteilhaft sein, wenn bereits bei einem entsprechenden höheren Mindestabstand zwischen den beiden Fahrzeugen eine Aktivierung der ersten und/oder zweiten Fahrzeugkomponente erfolgt.

Im Übrigen kann die Steuereinheit eingerichtet sein, bei ihrer Beurteilung, ob die entsprechende Fahrzeugkomponente angesteuert werden soll oder nicht, mit einzubeziehen, ob (voraussichtlich) das eigene Fahrzeug in näherer Zukunft ein Überholmanöver oder einen Spurwechsel einleiten wird. Dies kann beispielsweise durch die Beobachtung des vorausfahrenden Verkehrs, die Überwachung des Blinkers des Fahrzeugs und/oder die Überwachung der Lenkbewegungen des Fahrzeugs erfolgen.

Auch kann ein fahrzeuginternes Navigationssystem überwacht werden. Teilt dieses dem Fahrer mit, dass ein Spurwechsel oder ein Richtungswechsel (Abbiegen) erfolgen soll, kann rechtzeitig vor Einleitung dieser Richtungsänderung die Aufmerksamkeit des Fahrers auf den Heckbereich gerichtet werden (so wie dies oben beschrieben ist).

Gemäß einem weiteren Aspekt der Erfindung ist ein Verfahren zum Verbessern der Sicht durch eine Heckscheibe des Fahrzeugs basierend auf Informationen über ein sich hinter dem Fahrzeug befindendes hinteres Fahrzeug angegeben. Zunächst erfolgt eine Erfassung und Überwachung eines sich hinter dem Fahrzeug befindenden, hinteren Fahrzeugs, woraufhin eine erste Fahrzeugkomponente des Fahrzeugs in Abhängigkeit von einer erfassten Bewegung des hinteren Fahrzeugs angesteuert wird, wodurch die Sicht durch die Heckscheibe verbessert wird und/oder die Aufmerksamkeit des Fahrers auf den Heckbereich des Fahrzeugs gelenkt wird.

Gemäß einem weiteren Aspekt der Erfindung ist ein Programmelement angegeben, das, wenn es auf einer Steuereinheit eines Fahrzeugs ausgeführt wird, das Fahrzeug anleitet, die oben und im Folgenden beschriebenen Verfahrensschritte durchzuführen.

Gemäß einem weiteren Aspekt der Erfindung ist ein computerlesbares Medium angegeben, auf dem ein oben beschriebenes Programmelement gespeichert ist.

Das Programmelement kann Teil einer Software sein, die auf einem Prozessor einer Steuereinheit des Fahrzeugs gespeichert ist. Der Prozessor kann aber ebenso Gegenstand der Erfindung sein. Weiterhin umfasst dieser Aspekt ein Programmelement, welches schon von Anfang an die Erfindung verwendet, sowie auch ein Programmelement, welches durch eine Aktualisierung (Update) ein bestehendes Programm zur Verwendung der Erfindung veranlasst.

Im Folgenden werden mit Verweis auf die Figuren Ausführungsbeispiele der Erfindung beschrieben.

### Kurze Beschreibung der Figuren

Fig. 1 zeigt ein Fahrzeug gemäß einem Ausführungsbeispiel der Erfindung.
Fig. 2 zeigt Komponenten eines Fahrzeugs gemäß einem Ausführungsbeispiel der Erfindung.
Fig. 3 zeigt ein Flussdiagramm eines Verfahrens gemäß einem Ausführungsbeispiel der Erfindung.

### Detaillierte Beschreibung von Ausführungsbeispielen

Die Darstellungen in den Figuren sind schematisch und nicht maßstäblich.

Werden in der folgenden Figurenbeschreibung in verschiedenen Figuren die gleichen Bezugszeichen verwendet, so bezeichnen diese gleiche oder ähnliche Elemente. Gleiche oder ähnliche Elemente können aber auch durch unterschiedliche Bezugszeichen bezeichnet sein.

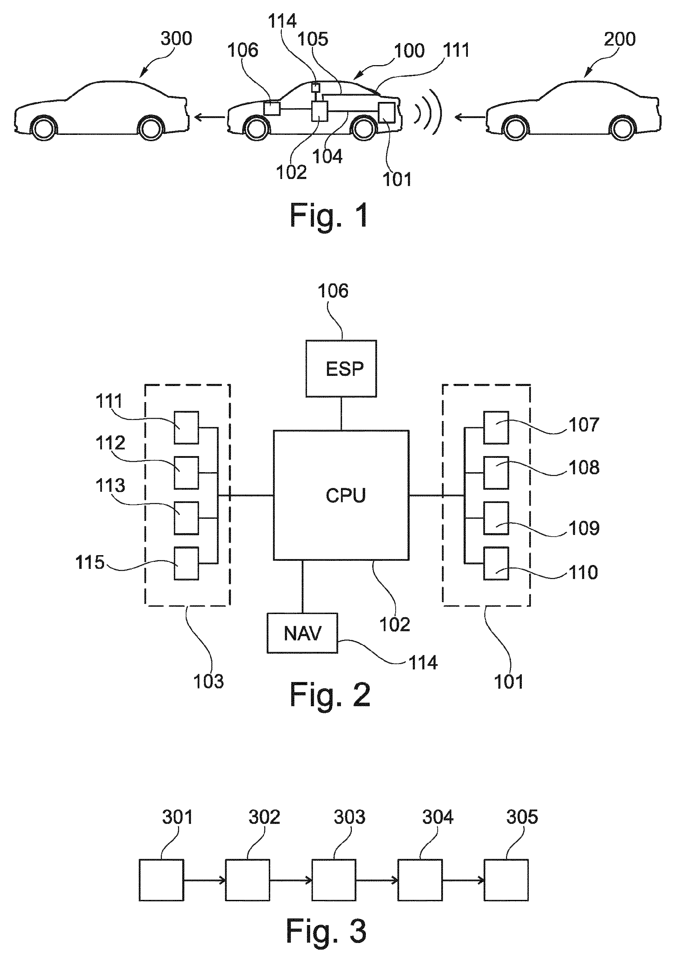

Fig. 1 zeigt ein Fahrzeug 100 gemäß einem Ausführungsbeispiel der Erfindung. Das Fahrzeug 100 weist eine Sensoranordnung 101 und eine Steuereinheit 102 auf, welche über die Datenleitung 104 mit der Sensoranordnung 101 verbunden ist.

Die Sensoranordnung 101 ist ausgeführt, den Straßenverkehr und insbesondere mobile Verkehrsteilnehmer im Heckbereich des Fahrzeugs 100 zu erfassen und zu überwachen. Beispielsweise kann sie das hintere Fahrzeug 200 erfassen und überwachen.

Die Sensoranordnung 101 kann hierfür beispielsweise einen Radarsensor, einen Lidarsensor, einen Ultraschallsensor und/oder eine optische Kamera aufweisen. Beispielsweise ist die Sensoranordnung 101 im Heckbereich des Fahrzeugs 100 untergebracht. Darüber hinaus kann die Sensoranordnung 101 weitere Sensoren aufweisen, die die Umgebung rund um das Fahrzeug und insbesondere vorausfahrende oder neben dem Fahrzeug fahrende andere Fahrzeuge erfassen und überwachen können.

Stellt die Sensoranordnung 101 fest, dass das hintere Fahrzeug 200 ein bestimmtes Kriterium erfüllt (beispielsweise das Unterschreiten eines Mindestabstands zum Fahrzeug 100, der im Übrigen abhängig sein kann von der aktuellen Geschwindigkeit des eigenen Fahrzeugs 100 und/oder der Relativgeschwindigkeit zwischen den beiden Fahrzeugen 100, 200), so generiert die Steuereinheit ein Signal, mit welchem sie den Heckscheibenwischer 111 des Fahrzeugs 100 über die Steuerleitung 105 aktiviert.

Alternativ oder zusätzlich hierzu können andere Fahrzeugkomponenten des Fahrzeugs 100 aktiviert bzw. angesteuert werden. Beispielsweise eine Heckscheibenheizung, eine Heckscheibenbelüftung oder eine Warneinheit zum Absetzen eines akustischen und/oder optischen Signals an den Fahrer des Fahrzeugs.

Darüber hinaus ist die Steuereinheit 102 mit dem ESP-System 106 des Fahrzeugs und ggf. mit einer Navigationseinheit 114 des Fahrzeugs verbunden. Auch die Messdaten des ESP-Systems 106 sowie die Daten, die vom Navigationssystem 114 erzeugt werden, können von der Steuereinheit berücksichtigt werden, um zu entscheiden, ob die entsprechende Fahrzeugkomponente aktiviert werden soll oder nicht.

Insbesondere kann die Sensorik 101 ausgeführt sein, auch den vorausfahrenden Verkehr 300 zu erfassen und zu überwachen, um die Relativbewegung dieser Verkehrsteilnehmer in Bezug auf das Eigenfahrzeug 100 bei der Entscheidung, ob die Fahrzeugkomponente zu aktivieren ist oder nicht, mit zu berücksichtigen.

Durch die Aktivierung des Heckscheibenwischers unter Berücksichtigung des rückseitigen Verkehrs ist es insbesondere an regnerischen Tagen möglich, dass die Aufmerksamkeit des Fahrers zum geeigneten Zeitpunkt auf den Heckbereich des Fahrzeugs gelenkt wird und gleichzeitig die Sicht durch die Heckscheibe verbessert wird.

Die Sensoranordnung 101 kann somit den hinter dem Fahrzeug 100 befindenden Verkehr erfassen und tracken. Kommt ein Verkehrsteilnehmer 200 dem eigenen Fahrzeug 100 so nahe, dass der Fahrer diesen Verkehrsteilnehmer in seine Entscheidungen (beispielsweise Einleiten eines Überholvorgangs oder eines Spurwechsels) mit einbeziehen muss, wird der hintere Scheibenwischer 111 aktiviert.

Ziel ist es, den Fahrer mit Informationen weder zu überfordern noch zu unterfordern. Die Aktivierung des hinteren Scheibenwischers lenkt die Aufmerksamkeit des Fahrers genau dann in diese Richtung, wenn es nützlich und sinnvoll ist. Sofern der rückliegende Verkehr bei Autobahnfahrten nicht relevant für den Fahrer ist, kann der Fahrer entlastet werden, indem die Heckscheibe trüb und verregnet bleibt, so dass er sich ausschließlich auf die vorausschauende Fahrt konzentrieren kann.

Fig. 2 zeigt zumindest einige der in dem Fahrzeug 100 der Fig. 1 vorgesehenen Komponenten. Hierbei handelt es sich insbesondere um die Steuereinheit 102, an welche die Sensoranordnung 101, das ESP-System 106, das Navigationssystem 114 sowie die Gruppe 103 der entsprechenden Fahrzeugkomponenten 111, 112, 113 angeschlossen ist.

An dieser Stelle sei darauf hingewiesen, dass die Kommunikation zwischen den oben genannten Einrichtungen und der Steuereinheit 102 drahtgebunden und/oder drahtlos vorgesehen sein kann.

Die Sensoranordnung 101 weist beispielsweise einen Radarsensor 107 und/oder einen Lidarsensor 108 und/oder einen Ultraschallsensor 109 und/oder eine optische Kamera 110 auf, welche in verschiedenen Bereichen des Fahrzeugs 100 angeordnet sein können.

Bei den Fahrzeugkomponenten kann es sich um einen Heckscheibenwischer 111 und/oder eine Heckscheibenheizung 112 und/oder eine Heckscheibenbelüftung 113 und/oder eine akustische oder optische Warnvorrichtung 115 handeln.

Fig. 3 zeigt ein Flussdiagramm eines Verfahrens gemäß einem Ausführungsbeispiel der Erfindung. In Schritt 301 erfasst und überwacht eine Sensoranordnung des Fahrzeugs den sich hinter dem Fahrzeug befindenden Verkehr. In Schritt 302 wird darüber hinaus der sich vor und neben dem Fahrzeug befindende Verkehr überwacht. In Schritt 303 analysiert eine Steuereinheit des Fahrzeugs die von der Sensorik erfassten Daten. In Schritt 304 analysiert die Steuereinheit darüber hinaus Daten des Navigationssystems des Fahrzeugs sowie weitere fahrzeuginterne Daten, die beispielsweise von einem ESP-System des Fahrzeugs erfasst werden.

Anhand aller dieser Daten bestimmt dann die Steuereinheit in Schritt 305, ob eine Fahrzeugkomponente, die mit einer Heckscheibe des Fahrzeugs im Zusammenhang steht, aktiviert werden soll oder nicht. Insbesondere kann vorgesehen sein, dass diese Fahrzeugkomponente nur dann aktiviert wird, wenn bestimmte Voraussetzungen hierfür erfüllt sind. Hierbei kann es sich beispielsweise um das Unterschreiten eines Mindestabstands zwischen dem eigenen Fahrzeug und einem sich dahinter befindenden Fahrzeug handeln, der von der aktuellen Geschwindigkeit des eigenen Fahrzeugs abhängt.

Ergänzend sei darauf hingewiesen, dass "umfassend" und "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Fahrzeug (100), aufweisend:
eine Sensoranordnung (101) zur Erfassung und Überwachung eines sich hinter dem Fahrzeug befindenden, hinteren Fahrzeugs (200);
eine Steuereinheit (102) zur Ansteuerung einer ersten Fahrzeugkomponente (111, 112, 113) des Fahrzeugs (100), die mit einer Heckscheibe des Fahrzeugs (100) zusammenhängt, in Abhängigkeit von einer von der Sensoranordnung (101) erfassten Bewegung des hinteren Fahrzeugs (200) oder von einem von der Sensoranordnung (101) erfassten Abstand zwischen den beiden Fahrzeugen (100, 200).

2. Fahrzeug (100) nach Anspruch 1,
wobei es sich bei der ersten Fahrzeugkomponente (111, 112, 113) um eine Fahrzeugkomponente handelt, durch welche die Sicht durch die Heckscheibe des Fahrzeugs (100) verbessert wird.

3. Fahrzeug (100) nach einem der vorhergehenden Ansprüche, wobei es sich bei der ersten Fahrzeugkomponente (111, 112, 113) um einen Heckscheibenwischer (111) des Fahrzeugs (100) handelt.

4. Fahrzeug (100) nach einem der vorhergehenden Ansprüche, wobei die Steuereinheit (102) zur Ansteuerung einer zweiten Fahrzeugkomponente (112, 113) des Fahrzeugs (100) in Abhängigkeit von der von der Sensoranordnung (101) erfassten Bewegung des hinteren Fahrzeugs (200) ausgeführt ist; wobei es sich bei der zweiten Fahrzeugkomponente (112, 113) um eine Heckscheibenheizung (112) oder einen Heckscheibenlüfter (113) handelt.

5. Fahrzeug (100) nach einem der vorhergehenden Ansprüche, wobei die Steuereinheit (102) zur Abgabe eines optischen, akustischen oder haptischen Warnsignals an den Fahrer des Fahrzeugs (100) in Abhängigkeit der von der Sensoranordnung (101) erfassten Bewegung des hinteren Fahrzeugs (200) ausgeführt ist.

6. Fahrzeug (100) nach einem der vorhergehenden Ansprüche, wobei die Sensoranordnung (101) zur Bestimmung der Relativgeschwindigkeit zwischen dem Fahrzeug (100) und dem hinteren Fahrzeug (200), sowie zur Bestimmung des Abstands zwischen dem Fahrzeug (100) und dem hinteren Fahrzeug (200) ausgeführt ist.

7. Fahrzeug (100) nach einem der vorhergehenden Ansprüche, wobei die Sensoranordnung (101) zur Erfassung und Überwachung eines sich vor dem Fahrzeug befindenden, vorderen Fahrzeugs (300) ausgeführt ist;
wobei die Steuereinheit (102) zur Ansteuerung der ersten Fahrzeugkomponente (111, 112, 113) des Fahrzeugs (100) in Abhängigkeit einer von der Sensoranordnung (101) erfassten Bewegung des vorderen Fahrzeugs (300) ausgeführt ist.

8. Verfahren zum Verbessern der Sicht durch eine Heckscheibe eines Fahrzeugs (100) basierend auf Informationen über ein sich hinter dem Fahrzeug (100) befindendes, hinteres Fahrzeug (200), das Verfahren aufweisend die Schritte:
Erfassen und Überwachen eines sich hinter dem Fahrzeug (100) befindenden, hinteren Fahrzeugs (200);
Ansteuern einer ersten Fahrzeugkomponente (111, 112, 113) des Fahrzeugs (100) in Abhängigkeit von einer erfassten Bewegung des hinteren Fahrzeugs (200) oder von einem von der Sensoranordnung (101) erfassten Abstand zwischen den beiden Fahrzeugen (100, 200), wodurch die Sicht durch die Heckscheibe verbessert wird.

9. Programmelement, das, wenn es auf einer Steuereinheit(102) eines Fahrzeugs (100) ausgeführt wird, das Fahrzeug anleitet, die folgenden Schritte durchzuführen:
Erfassen und Überwachen eines sich hinter dem Fahrzeug (100) befindendes, hinteres Fahrzeugs (200);
Ansteuern einer ersten Fahrzeugkomponente (111, 112, 113) des Fahrzeugs (100) in Abhängigkeit von einer erfassten Bewegung des hinteren Fahrzeugs (200) oder von einem von der Sensoranordnung (101) erfassten Abstand zwischen den beiden Fahrzeugen (100, 200), wodurch die Sicht durch die Heckscheibe verbessert wird.

10. Computerlesbares Medium, auf dem ein Programmelement nach Anspruch 9 gespeichert ist.
